# EUROPÄISCHE PATENTSCHRIFT

(11) **EP 2 652 304 B1**
(45) Veröffentlichungstag und Bekanntmachung des Hinweises auf die Patenterteilung: **20.03.2019**
(21) Anmeldenummer: 11791444.0
(22) Anmeldetag: 02.12.2011
(51) Int. Cl.: F01N 5/02, F02G 5/02, F01K 13/02, F01K 23/06

(54) **ABWÄRMENUTZUNGSVORRICHTUNG, BETRIEBSVERFAHREN**
WASTE-HEAT UTILIZATION APPARATUS, OPERATING METHOD
DISPOSITIF D'UTILISATION DE LA CHALEUR PERDUE, PROCÉDÉ DE FONCTIONNEMENT

(30) Priorität: 16.12.2010 DE 102010054733
(43) Veröffentlichungstag der Anmeldung: 23.10.2013
(73) Patentinhaber: Daimler AG, 70327 Stuttgart (DE)
(72) Erfinder: GÄRTNER, Jan, 71229 Leonberg (DE); KOCH, Thomas, 71034 Böblingen (DE)
(74) Vertreter: JENSEN & SON
(86) Internationale Anmeldenummer: PCT/EP2011/006039
(87) Internationale Veröffentlichungsnummer: WO 2012/079709

(56) Entgegenhaltungen:
- EP-A1- 1 930 603
- WO-A2-2011/131482
- DE-A1-102006 043 491
- DE-B3-102009 056 822
- US-A1- 2005 072 182
- US-A1- 2010 287 920

## Beschreibung

Die vorliegende Erfindung betrifft eine Abwärmenutzungsvorrichtung für eine Brennkraftmaschine, insbesondere eines Kraftfahrzeugs, mit den Merkmalen des Oberbegriffs des Anspruchs 1. Die Erfindung betrifft außerdem ein zugehöriges Betriebsverfahren.

Aus der JP 2006-349211 A ist eine Abwärmenutzungsvorrichtung bekannt, die nach dem Rankine-Kreisprozess bzw. nach dem Rankine-Clausius-Kreisprozess arbeitet. Eine derartige Abwärmenutzungsvorrichtung umfasst einen Abwärmenutzungskreis, in dem ein Arbeitsmedium zirkuliert, eine im Abwärmenutzungskreis angeordnete Fördereinrichtung zum Fördern des Arbeitsmediums gegen einen Hochdruck, einen im Abwärmenutzungskreis stromab der Fördereinrichtung angeordneten Verdampfer zum Verdampfen des Arbeitsmediums unter Nutzung von Abwärme der Brennkraftmaschine, eine im Abwärmenutzungskreis stromab des Verdampfers angeordnete Expansionsmaschine zum Expandieren des Arbeitsmediums auf einen Niederdruck und einen im Abwärmenutzungskreis stromab der Expansionsmaschine angeordneten Kondensator zum Kondensieren des Arbeitsmediums.

Bei der bekannten Abwärmenutzungsvorrichtung ist der Verdampfer mit einem Kühlkreis der Brennkraftmaschine wärmeübertragend gekoppelt, um so der Brennkraftmaschine Wärmeenergie zu entziehen. Außerdem ist bei der bekannten Abwärmenutzungsvorrichtung der Kondensator mit einem Kältekreis einer Klimaanlage eines mit der Brennkraftmaschine ausgestatteten Fahrzeugs wärmeübertragend gekoppelt, um Wärmeenergie vom Abwärmenutzungskreis abzuführen. Darüber hinaus ist bei der bekannten Abwärmenutzungsvorrichtung eine fluidische Kopplung zwischen dem Kältekreis der Klimaanlage und dem Abwärmenutzungskreis vorgesehen.

Aus der DE 28 18 003 A1 ist ein Heiz- oder Kühlgerät auf Basis eines Rankine-Kreisprozesses bekannt, das einen Hauptströmungskreis für ein fluides Kältemittel aufweist, in dem in Strömungsrichtung nacheinander ein mit einer Wärmequelle zusammenwirkender Wärmetauscher als Kompressor für das fluide Kältemittel, ein Wärmetauscher als Kondensator für das fluide Kältemittel, ein Druckreduzierventil, ein Wärmetauscher, der bevorzugt mit einem zu kühlenden Luftstrom zusammenwirkt, als Verdampfer und eine Rückführ-Pumpe zum speisen des Kompressor mit dem fluiden Kältemittel liegt, wobei der Kompressor aus wenigstens zwei Wärmetauschern für Wärmetausch zwischen dem fluiden Kältemittel und der Wärmequelle gebildet ist und Umschalteinrichtungen vorgesehen sind, um den Kondensator abwechselnd aus den beiden Wärmetauschern zu speisen und gleichzeitig von der Pumpe denjenigen der Wärmetauscher zu speisen, der gerade nicht den Kondensator speist, mit einer der abwechselnden Funktion der Wärmetauscher angepassten Umschaltfolge. Die Rückführ-Pumpe speist dabei den jeweils gerade angeschlossenen Wärmetauscher bevorzugt mit fluidem Kältemittel im dampfförmigen Aggregatzustand. Beim bekannten Heiz- oder Kühlgerät sind die Umschalteinrichtungen vor allem dafür vorgesehen, sicherzustellen, dass die Wärmequelle nur mit demjenigen Wärmetauscher bzw. mit denjenigen Wärmetauschern des thermischen Kompressors zusammenwirkt, der bzw. die gerade mit fluidem Kältemittel gefüllt ist bzw. sind. Um die Gleichförmigkeit der Funktion des bekannten Heiz- oder Kühlgeräts zu steigern, ist unmittelbar hinter dem Kondensator eine Speicherflasche vorgesehen, die die Speisung des Hauptströmungskreises, also des Druckreduzierventils und des diesem nachgeschalteten Verdampfers, auch während derjenigen Zeitintervalle von einigen Sekunden Länge fortsetzt, in denen die Wärmetauscher im Zuge des Umschaltvorgangs vorübergehend abgeschaltet sind.

Die US 2010/287920 A1 zeigt eine Vorrichtung zur Kontrolle von Arbeitsfluid, das in einem geschlossenen Rankine-Kreislauf zirkuliert, wobei der Kreislauf einen Verdampfer, eine Expansionseinrichtung, einen Kondensator und eine Fluidpumpe umfasst, und einen Druckspeicherbehälter für das Arbeitsfluid sowie Mittel für eine selektive Zirkulation des Arbeitsfluids zwischen dem Behälter und dem Kreislauf besitzt, umfassend zwei Fluidzirkulationsleitungen, die durch ein Ventil kontrolliert werden, wobei eine der Fluidzirkulationsleitungen den Behälter mit dem Eingang der Fluidpumpe verbindet, und die andere der Leitungen den Behälter mit dem Ausgang der Fluidpumpe verbindet, um Arbeitsfluid in diesen Kreislauf einzuleiten oder es aus diesem Kreislauf zu entnehmen, um die gewünschte Menge sowie den jeweiligen gewünschten Druck am Einlass und am Auslass der Expansionseinrichtung zu erhalten.

Eine Abwärmenutzungsvorrichtung, die nach dem Rankine-Kreisprozess bzw. nach dem Rankine-Clausius-Kreisprozess arbeitet, ist für einen Betrieb mit vergleichsweise hohen Temperaturen im Arbeitsmedium ausgelegt, z. B. mindestens 200° C, Bei ausgeschalteter Brennkraftmaschine kommt es zu einer Abkühlung des Arbeitsmediums, was mit einem signifikanten Druckabfall einhergeht. Beispielsweise kann in einem Ruhezustand, bei dem innerhalb der Abwärmenutzungsvorrichtung im Wesentlichen Umgebungstemperatur vorliegt, ein Ruhedruck im Arbeitsmedium, das bspw. durch ein Gemisch aus 70% H₂O und 30% Ethanol gebildet sein kann, entstehen, der bspw. bei etwa 30mbar (absolut) liegen kann. Um derartige niedrige Drücke dauerhaft abdichten zu können, ist ein enormer Aufwand erforderlich. Vermeidet man diesen Aufwand, kommt es im Ruhezustand zu einer Diffusion von Umgebungsluft in den Abwärmenutzungskreis. Versucht man dagegen, die Menge des Arbeitsmediums im Abwärmenutzungskreis zu erhöhen, kommt es im Warmbetrieb zu stark erhöhten Drücken, die ebenfalls nur mit einem vergleichsweise hohen Aufwand beherrschbar sind.

Die vorliegende Erfindung beschäftigt sich daher mit dem Problem, für eine Abwärmenutzungsvorrichtung der eingangs genannten Art bzw. für ein zugehöriges Betriebsverfahren eine verbesserte Ausführungsform anzugeben, die sich insbesondere dadurch auszeichnet, dass der Aufwand zur Abdichtung für den Ruhezustand bzw. für den Warmbetriebszustand reduziert ist. Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Masse bzw. das Volumen des Arbeitsmediums das im, vorzugsweise geschlossenen, Abwärmenutzungskreis zirkulieren kann, für den Ruhezustand zu erhöhen. Hierdurch wird erreicht, dass der Druck im Arbeitsmedium beim Abkühlen auf Umgebungstemperatur nicht soweit abfallen kann, wie er dies bei konstantem Volumen bzw. bei konstanter Masse des Arbeitsmediums abfallen würde. Durch den erfindungsgemäßen Vorschlag wird somit erreicht, dass bei ausgeschalteter Abwärmenutzungsvorrichtung im Arbeitsmedium ein Mindestdruck eingestellt bzw. gewährleistet werden kann, der oberhalb eines Ruhedrucks liegt, der sich beim Abkühlen des Arbeitsmediums dann einstellen würde, wenn die Masse bzw. das Volumen des Arbeitsmediums, das während des Warmbetriebs im Abwärmenutzungskreis zirkulieren kann, konstant gehalten würde.

Apparativ kann ein derartiger Mindestdruck im Arbeitsmedium mit Hilfe eines im Abwärmenutzungskreis angeordneten bzw. damit gekoppelten Druckspeichers eingestellt bzw. gewährleistet werden.

Der Mindestdruck im Arbeitsmedium, der für den Ruhezustand oder Kaltzustand des Abwärmenutzungskreises eingestellt bzw. gewährleistet werden soll, kann fest vorbestimmt oder einstellbar sein, und insbesondere abhängig von der jeweiligen Umgebungstemperatur auswählbar sein.

Ein derartiger Druckspeicher kann bspw. zwischen dem Kondensator und der Fördereinrichtung im Abwärmenutzungskreis angeordnet sein, also in einem Bereich des Abwärmenutzungskreises, in dem das Arbeitsmedium im Normalbetrieb üblicherweise flüssig ist. Somit kann der Druckspeicher als Flüssigspeicher ausgestaltet werden, so dass vergleichsweise viel Masse bei wenig Volumen bevorratet werden kann.

Der Druckspeicher kann bspw. als Federspeicher ausgestaltet sein, bei dem ein Speichervolumen mittels einer Federkraft auf den Mindestdruck vorgespannt ist. Somit kann der Druckspeicher besonders einfach und preiswert realisiert werden, und zwar bevorzugt als passiver Druckspeicher. Grundsätzlich ist es bei einem derartigen Federdruckspeicher möglich, die Federkraft einstellbar auszugestalten, so dass der Federdruckspeicher auch als aktiver Federdruckspeicher realisierbar ist. Denn durch die einstellbare Federkraft lässt sich auch der Mindestdruck variieren bzw. einstellen.

Allgemein kann vorgesehen sein, den Druckspeicher als aktiver Druckspeicher auszugestalten, der einen Aktuator zum Verändern des Mindestdrucks aufweist. Ein derartiger aktiver Druckspeicher, insbesondere ein aktiver Federdruckspeicher ermöglicht eine situationsabhängige Anpassung des Mindestdrucks. Beispielsweise kann der Mindestdruck abhängig von Umgebungsparametern, wie z. Bsp. Umgebungstemperatur und/oder Umgebungsdruck, gewählt werden.

Bei einem aktiven Druckspeicher ist die Abwärmenutzungsvorrichtung zweckmäßig mit einer Steuereinrichtung ausgestattet, die zum Betätigen des Aktuators zum Einstellen des Mindestdrucks abhängig vom aktuellen Betriebszustand des Abwärmenutzungskreises und/oder der Brennkraftmaschine dient. Somit ist es nicht nur möglich, für die Abkühlung der Abwärmenutzungsvorrichtung stets den gewünschten Mindestdruck zu gewährleisten, vielmehr kann auch während des Warmbetriebs eine Adaption des Mindestdrucks bzw. des Systemdrucks durchgeführt werden, bspw. um Masseverschiebungen zwischen Flüssigphase und Gasphase ausgleichen zu können, die bspw. bei transienten Betriebszuständen auftreten können.

Besonders zweckmäßig ist eine Ausführungsform, bei der in einem auf Umgebungstemperatur abgekühlten Kaltzustand der Abwärmenutzungsvorrichtung im Arbeitsmedium ein Mindestdruck von wenigstens 500mbar, bevorzugt von mindestens 600mbar, eingestellt bzw. gewährleistet wird. Derart geringe Unterdrücke gegenüber ein 1bar Umgebungsdruck lassen sich vergleichsweise einfach beherrschen, was den apparativen Aufwand zur Realisierung der Abwärmenutzungsvorrichtung reduziert.

Entsprechend einer anderen vorteilhaften Ausführungsform kann vorgesehen sein, dass während des Warmbetriebs der Abwärmenutzungsvorrichtung für transiente Betriebszustände der Abwärmenutzungsvorrichtung der Hochdruck mit Hilfe des aktiven Druckspeichers geregelt und/oder gesteuert wird. Transiente Betriebszustände der Abwärmenutzungsvorrichtung können dann entstehen, wenn sich das Wärmeabgabepotential der verwendeten Wärmequelle verändert. Die Wärmequelle wird im Allgemeinen durch die Brennkraftmaschine gebildet. Im Speziellen wird dabei eine Abgasanlage der Brennkraftmaschine als Wärmequelle bevorzugt, da dort vergleichsweise viel Abwärme zur weiteren Nutzung zur Verfügung steht. Ändert die Brennkraftmaschine ihren Betriebszustand hinsichtlich Last und/oder Drehzahl, ändern sich zeitnah auch Temperatur, Druck und Volumenstrom im Abgas, also die im Abgas transportierte Wärme. Verändert sich die im Verdampfer auf das Arbeitsmedium übertragbare Wärme, verändert sich auch die Verdampfungsleistung des Verdampfers, was zu einer Masseverschiebung des Arbeitsmediums zwischen Flüssigphase und Gasphase innerhalb des Abwärmenutzungskreises führt und letztlich den Hochdruck im Abwärmenutzungskreis beeinflusst. Da die Abwärmenutzungsvorrichtung üblicherweise für einen bestimmten Nennbetriebszustand mit einem relativ engen Druckbereich für optimale Hochdrücke ausgelegt ist, reduziert ein stark variierender und aus dem gewünschten Hochdruckintervall herausfallender Hochdruck den Wirkungsgrad der Abwärmenutzungsvorrichtung. Durch die Nutzung des bei der erfindungsgemäßen Abwärmenutzungsvorrichtung vorhandenen Druckspeichers zum Steuern bzw. Regeln des Hochdrucks kann bei derartigen transienten Betriebszuständen vergleichsweise einfach gewährleistet werden, dass der Hochdruck des Abwärmenutzungskreises innerhalb des vorbestimmten Hochdruckintervalls verbleibt, so dass die Abwärmenutzungsvorrichtung innerhalb ihres optimierten Nennbetriebs und somit bei optimalem Wirkungsgrad arbeitet.

Entsprechend einer weiteren vorteilhaften Ausführungsform kann der Druckspeicher, bspw. mittels einer Ventileinrichtung, aktivierbar und deaktivierbar sein. Im aktivierten Zustand ist der Druckspeicher fluidisch mit dem Abwärmenutzungskreis gekoppelt, so dass Arbeitsmedium vom Druckspeicher in den Abwärmenutzungskreis und zurück fließen kann. Im deaktivierten Zustand ist der Druckspeicher fluidisch vom Abwärmenutzungskreis entkoppelt, so dass kein Austausch von Arbeitsmedium zwischen Druckspeicher und Abwärmenutzungskreis möglich ist. Durch die Möglichkeit, den Druckspeicher zu aktivieren und zu deaktivieren, kann die Abwärmenutzungsvorrichtung im Warmbetrieb entsprechend ihrer Auslegung optimal betrieben werden, ohne dass das zusätzliche, im Druckspeicher bevorratete Arbeitsmedium berücksichtigt werden muss. Hierdurch ergibt sich eine besonders einfache Handhabung bzw. Auslegung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung einer Abwärmenutzungsvorrichtung,
- Fig. 2 bis 4: jeweils eine stark vereinfachte, prinzipielle Schnittansicht eines Druckspeichers bei verschiedenen Ausführungsformen.

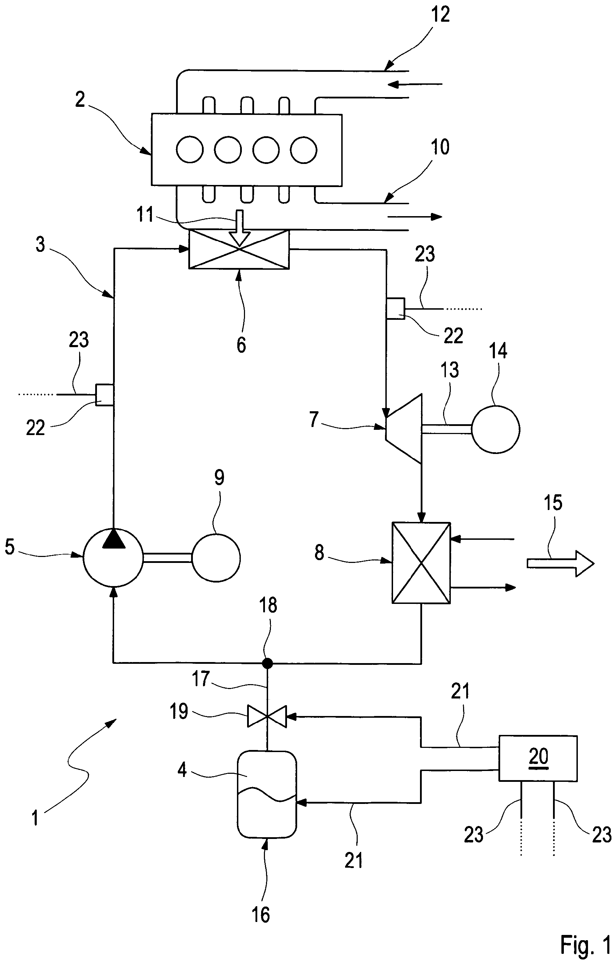

Entsprechend Fig. 1 umfasst eine Abwärmenutzungsvorrichtung 1, die zusammen mit einer Brennkraftmaschine 2 in einem Kraftfahrzeug angeordnet sein kann, einen Abwärmenutzungskreis 3, in dem ein Arbeitsmedium 4 zirkuliert. Der Abwärmenutzungskreis 3 ist bevorzugt als geschlossener Kreis ausgestaltet. Die Abwärmenutzungsvorrichtung 1 umfasst außerdem eine Fördereinrichtung 5, einen Verdampfer 6, eine Expansionsmaschine 7 und einen Kondensator 8.

Die Fördereinrichtung 5 ist im Abwärmenutzungskreis 3 angeordnet und dient zum Fördern des Arbeitsmediums 4 gegen einen Hochdruck. Zweckmäßig ist die Fördereinrichtung 5 als volumentrische Pumpe ausgestaltet und ist hierzu mit einem Antriebsmotor 9 antriebsgekoppelt. Der Verdampfer 6 ist im Abwärmenutzungskreis 3 stromab der Fördereinrichtung 5 angeordnet und dient zum Verdampfen des Arbeitsmediums 4, wozu der Verdampfer 6 Abwärme der Brennkraftmaschine 2 nutzt. Im Beispiel ist der Verdampfer 6 hierzu wärmeübertragend mit einer Abgasanlage 10 der Brennkraftmaschine 2 gekoppelt. Ein entsprechender Wärmestrom ist durch einen Pfeil 11 angedeutet. Die Brennkraftmaschine 2 weist außerdem eine Frischluftanlage 12 auf.

Die Expansionsmaschine 7, bspw. in Form einer Turbine, ist im Abwärmenutzungskreis 3 stromab des Verdampfers 6 angeordnet und dient zum Expandieren des Arbeitsmediums 4 auf einen Niederdruck. Gleichzeitig kann mit Hilfe der Expansionsmaschine 7 dem Arbeitsmedium Energie entzogen werden und zwar in Form mechanischer Arbeit, bspw. zum Antreiben einer Welle 13. Über die Welle 13 kann die dem Arbeitsmedium 4 entzogene Energie oder Arbeit zum Antreiben eines Generators 14 und/oder einer beliebigen anderen Maschine oder Komponente der Brennkraftmaschine 2 bzw. des damit ausgestatteten Fahrzeugs verwendet werden. Auch kann über die Welle 13 Antriebsleistung an einen nicht gezeigten Antriebsstrang der Brennkraftmaschine 2 übertragen werden, um die Antriebsleistung der Brennkraftmaschine 2 zu unterstützen.

Der Kondensator 8 ist im Abwärmenutzungskreis 3 stromab der Expansionsmaschine 7 angeordnet und dient zum Kondensieren des Arbeitsmediums 4. Hierzu wird dem Arbeitsmedium 4 gemäß einem Pfeil 15 Wärme entzogen.

Der Abwärmenutzungskreis 3 ist somit als Rankine-Kreisprozess bzw. Rankine-Clausius-Kreisprozess ausgestaltet.

Die erfindungsgemäße Abwärmenutzungsvorrichtung 1 ist außerdem mit einem Druckspeicher 16 ausgestattet, der hierzu im Abwärmenutzungskreis 3 angeordnet ist und mit dem im Arbeitsmedium 4 ein vorbestimmter und/oder ein einstellbarer Mindestdruck eingestellt und/oder gewährleistet werden kann. Zweckmäßig ist der Druckspeicher 16 zwischen dem Kondensator 8 und der Fördereinrichtung 5 im Abwärmenutzungskreis 3 angeordnet bzw. daran angeschlossen. Hierzu kann bspw. eine Verbindungsleitung 17 vorgesehen sein, die den Druckspeicher 16 mit dem Abwärmenutzungskreis 3 fluidisch koppelt. Eine Anschlussstelle 18, in welcher die Verbindungsleitung 17 an den Abwärmenutzungskreis 4 angeschlossen ist, befindet sich im Beispiel stromab des Kondensators 8 und stromauf der Fördereinrichtung 5.

In der Verbindungsleitung 17 kann eine Ventileinrichtung 19 angeordnet sein, mit deren Hilfe die Verbindungsleitung 17 geöffnet und gesperrt werden kann. Die Ventileinrichtung 19 kann hierzu mit Hilfe einer Steuereinrichtung 20 zum Öffnen und Sperren der Verbindungsleitung 17 betätigt werden. Sofern der Druckspeicher 16 als aktiver Druckspeicher 16 ausgestaltet ist, der eine Veränderung des Mindestdrucks im Arbeitsmedium 4 ermöglicht, kann dieser ebenfalls von der Steuereinrichtung 20 betätigt werden. Entsprechende Betätigungsleitungen oder Steuerleitungen zum Betätigen der Ventileinrichtung 19 bzw. zum Betätigen des aktiven Druckspeichers 16 sind dabei mit 21 bezeichnet.

Im Beispiel ist die Abwärmenutzungsvorrichtung 1 außerdem mit wenigstens einem Drucksensor 22 ausgestattet, der über eine entsprechende Signalleitung 23 ebenfalls mit der Steuereinrichtung 20 gekoppelt ist, um der Steuereinrichtung 20 den jeweils gemessenen Druck im Arbeitsmedium 4 zu übermitteln. Im Beispiel sind zwei derartige Drucksensoren 22 eingetragen bzw. zwei mögliche Einbauorte für einen derartigen Drucksensor 22 andeuten. Der eine Drucksensor 22 befindet sich dabei zwischen der Fördereinrichtung 5 und dem Verdampfer 6 im Abwärmenutzungskreis 3. Der andere Drucksensor 22 befindet sich im Abwärmenutzungskreis 3 zwischen Verdampfer 6 und Expansionsmaschine 7. Somit misst der eine Drucksensor 22 den Hochdruck im flüssigen Arbeitsmedium, während der andere Drucksensor 22 den Hochdruck im dampfförmigen Arbeitsmedium misst.

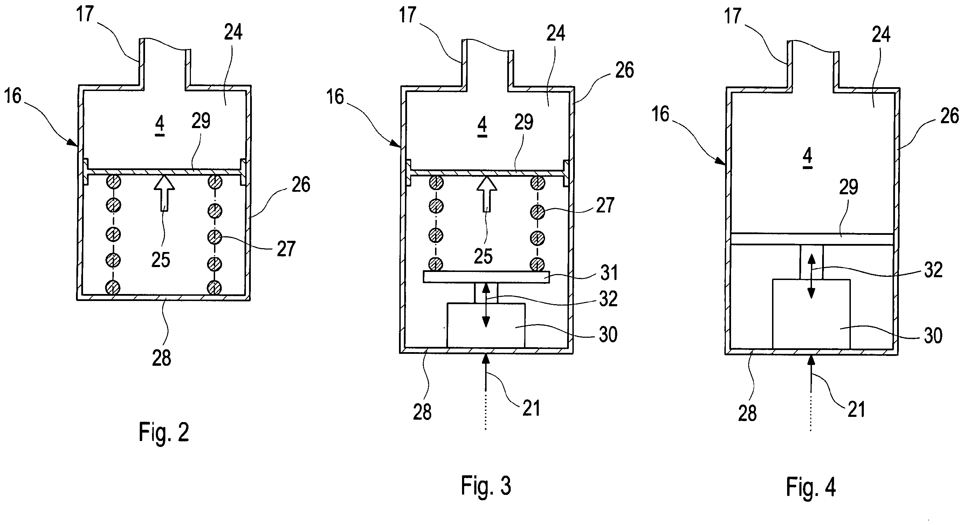

Entsprechend Fig. 2 kann der Druckspeicher 16 als Federspeicher ausgestaltet sein. Bei einem derartigen Federdruckspeicher 16 ist ein Speichervolumen 24 mittels einer durch einen Pfeil angedeuteten Federkraft 25 auf besagten Mindestdruck vorgespannt. Zur Erzeugung der Federkraft 25 ist in einem Gehäuse 26 des Druckspeichers 16 zumindest eine Feder 27 vorgesehen, die sich einerseits an einem Boden 28 des Gehäuses 26 und andererseits an einer Trennwand 29 abstützt. Besagte Trennwand 29 begrenzt das Speichervolumen 24. Die Trennwand 29 kann wie im gezeigten Beispiel als Kolben ausgestaltet sein. Ebenso kann es sich bei der Trennwand 29 um eine verstellbare Membran handeln, so dass der hier gezeigte Federspeicher 16 dann als Membranfederspeicher 16 arbeitet. Hierbei handelt es sich um einen passiven Druckspeicher 16 bzw. um einen passiven Federdruckspeicher 16.

Fig. 3 zeigt einen weiteren Federdruckspeicher 16, bei dem jedoch die Federkraft 25 einstellbar ist, so dass es sich hierbei um einen aktiven Federdruckspeicher 16 handelt. Beispielsweise kann dieser aktive Federdruckspeicher 16 einen Aktuator 30 aufweisen, mit dem ein Widerlager 31 entsprechend einem Doppelpfeil 32 verstellbar bzw. relativ zum Gehäuseboden 28 positionierbar ist. Die wenigstens eine Feder 27 stützt sich bei diesem aktiven Federspeicher 16 gehäuseseitig am Widerlager 31 ab. Durch Verändern der Position des Widerlagers 31 relativ zum Gehäuseboden 28 kann die Vorspannung 25 der jeweiligen Feder 27 verändert werden. Da der Druck im Arbeitsmedium 4 bzw. im Speichervolumen 24 von der Federkraft 25 abhängt, kann durch Betätigen des Aktuators 30 der Mindestdruck im Arbeitsmedium 4 variiert werden.

Fig. 4 zeigt einen weiteren aktiven Druckspeicher 16, der jedoch nicht als Federspeicher ausgestaltet ist. Bei dieser Ausführungsform enthält der Druckspeicher 16 wieder einen Aktuator 30, der in diesem Fall jedoch zum Verstellen der Trennwand 29 relativ zum Gehäuseboden 28 dient. Hierdurch kann ebenfalls der Druck des im Speichervolumen 24 bevorrateten Arbeitsmediums 4 verändert werden.

Der Druckspeicher 16 ist dabei so ausgelegt, dass er bei ausgeschalteter Abwärmenutzungsvorrichtung 1 im Arbeitsmedium 4 einen Mindestdruck einstellt bzw. gewährleistet, der oberhalb eines Ruhedrucks liegt. Dieser Ruhedruck würde sich bei fehlendem Druckspeicher 16 bzw. bei deaktiviertem Druckspeicher 16 beim Abkühlen der aktiven Masse des Arbeitsmediums 4 auf Umgebungstemperatur einstellen. Die aktive Masse des Arbeitsmediums 4 ist dabei diejenige Masse, die bei eingeschalteter Abwärmenutzungsvorrichtung 1 während eines Warmbetriebs im Abwärmenutzungskreis 3 zirkuliert. Dieser Mindestdruck kann in einem auf Umgebungstemperatur abgekühlten Kaltzustand oder Ruhezustand der Abwärmenutzungsvorrichtung 1 z. B. mindestens 500mbar, bevorzugt mindestens 600mbar, betragen.

Sofern ein aktiver Druckspeicher 16 verwendet wird, kann die Steuereinrichtung 20 den jeweiligen Druckspeicher 16 so ansteuern, dass sich im Arbeitsmedium 4 ein Mindestdruck einstellt, der vom aktuellen Betriebszustand der Abwärmenutzungsvorrichtung 1 bzw. der Brennkraftmaschine 2 abhängt. Beispielsweise kann die Steuereinrichtung 20 Laständerungen und/oder Drehzahländerungen der Brennkraftmaschine 2 hinsichtlich ihrer Auswirkung auf den Druck im Abwärmenutzungskreis 3 quasi vorausschauend berücksichtigen, um durch die damit einhergehende Änderung des Wärmestroms 11 eine daraus resultierende Änderung im Hochdruck des Abwärmenutzungskreises 3 auffangen bzw. begrenzen zu können. Insbesondere kann während des Warmbetriebs der Abwärmenutzungsvorrichtung 1 für transiente Betriebszustände der Abwärmenutzungsvorrichtung 1 der Hochdruck mit Hilfe des aktiven Druckspeichers 16 geregelt und/oder gesteuert werden, insbesondere um Variationen des Wärmeeintrags 11 kompensieren zu können.

Für derartige Kompensationsvorgänge ist der Druckspeicher 16 über eine entsprechende Betätigung der Ventileinrichtung 19 aktivierbar. Sobald wieder ein stationärer Betriebszustand innerhalb der Abwärmenutzungsvorrichtung 1 vorliegt, kann der Druckspeicher 16 durch eine entsprechende Betätigung der Ventileinrichtung 19 wieder deaktiviert werden, bspw. um störende Wechselwirkungen zwischen den im Abwärmenutzungskreis 3 zirkulierenden Arbeitsmedium 4 und dem im Druckspeicher 16 bevorrateten Arbeitsmedium 4 zu vermeiden.

## Patentansprüche

1. Abwärmenutzungsvorrichtung für eine Brennkraftmaschine (2) eines Kraftfahrzeugs,
- mit einem Abwärmenutzungskreis (3), in dem ein Arbeitsmedium (4) zirkuliert,
- mit einer im Abwärmenutzungskreis (3) angeordneten Fördereinrichtung (5) zum Fördern des Arbeitsmediums (4) gegen einen Hochdruck,
- mit einem im Abwärmenutzungskreis (3) stromab der Fördereinrichtung (5) angeordneten Verdampfer (6) zum Verdampfen des Arbeitsmediums (4) unter Nutzung von Abwärme der Brennkraftmaschine (2),
- mit einer im Abwärmenutzungskreis (3) stromab des Verdampfers (6) angeordneten Expansionsmaschine (7) zum Expandieren des Arbeitsmediums (4) auf einen Niederdruck,
- mit einem im Abwärmenutzungskreis (3) stromab der Expansionsmaschine (7) angeordneten Kondensator (8) zum Kondensieren des Arbeitsmediums (4),
- wobei der Abwärmenutzungskreis (3) mit einem Druckspeicher (16) verbunden ist, **dadurch gekennzeichnet, dass**
- der Druckspeicher (16) als aktiver Druckspeicher zum Gewährleisten eines vorbestimmten Mindestdrucks im Arbeitsmedium (4) ausgestaltet ist und einen Aktuator (30) zum Verändern des Mindestdrucks aufweist,
- eine Steuereinrichtung (20) zum Betätigen des Aktuators (30) zum Einstellen des Mindestdrucks abhängig vom aktuellen Betriebszustand der Abwärmenutzungsvorrichtung (1) oder der Brennkraftmaschine (2) vorgesehen ist,
- wobei der Mindestdruck oberhalb eines Ruhedrucks liegt, der sich beim Abkühlen der aktiven Masse des Arbeitsmediums (4), die bei eingeschalteter Abwärmenutzungsvorrichtung (1) während eines Warmbetriebs zirkuliert, auf Umgebungstemperatur einstellen würde.

2. Abwärmenutzungsvorrichtung nach Anspruch 1,
**dadurch gekennzeichnet, dass**
der Druckspeicher (16) stromab des Kondensators (8) und stromauf der Fördereinrichtung (5) im Abwärmenutzungskreis (3) angeordnet oder an den Abwärmenutzungskreis (3) angeschlossen ist.

3. Abwärmenutzungsvorrichtung nach Anspruch 1 oder 2,
**dadurch gekennzeichnet, dass**
der Druckspeicher (16) als Federspeicher ausgestaltet ist, bei dem ein Speichervolumen (24) mittels einer einstellbaren Federkraft (25) auf den Mindestdruck vorgespannt ist.

4. Verfahren zum Betreiben einer Abwärmenutzungsvorrichtung (1) für eine Brennkraftmaschine (2) eines Kraftfahrzeugs,
- wobei die Abwärmenutzungsvorrichtung (1) umfasst:
- einen Abwärmenutzungskreis (3), in dem ein Arbeitsmedium (4) zirkuliert,
- eine im Abwärmenutzungskreis (3) angeordnete Fördereinrichtung (5) zum Fördern des Arbeitsmediums (4) gegen einen Hochdruck,
- einen im Abwärmenutzungskreis (3) stromab der Fördereinrichtung (5) angeordneten Verdampfer (6) zum Verdampfen des Arbeitsmediums (4) unter Nutzung von Abwärme der Brennkraftmaschine (2),
- eine im Abwärmenutzungskreis (3) stromab des Verdampfers (6) angeordnete Expansionsmaschine (7) zum Expandieren des Arbeitsmediums (4) auf einen Niederdruck,
- einen im Abwärmenutzungskreis (3) stromab der Expansionsmaschine (7) angeordneten Kondensator (8) zum Kondensieren des Arbeitsmediums (4),
- wobei der Abwärmenutzungskreis (3) mit einem Druckspeicher (16) verbunden ist,
**dadurch gekennzeichnet, dass**
bei ausgeschalteter Abwärmenutzungsvorrichtung (1) im Arbeitsmedium (4) ein Mindestdruck gewährleistet wird, der oberhalb eines Ruhedrucks liegt, der sich beim Abkühlen der aktiven Masse des Arbeitsmediums (4), die bei eingeschalteter Abwärmenutzungsvorrichtung (1) während eines Warmbetriebs zirkuliert, auf Umgebungstemperatur einstellen würde.

5. Verfahren nach Anspruch 4,
**dadurch gekennzeichnet, dass**
in einem auf Umgebungstemperatur abgekühlten Kaltzustand der Abwärmenutzungsvorrichtung (1) in dem Arbeitsmedium (4) ein Mindestdruck von wenigstens 500mbar gewährleistet wird.

6. Verfahren nach Anspruch 4 oder 5,
**dadurch gekennzeichnet, dass**
der Mindestdruck mittels des Druckspeichers (16) gewährleistet wird, der stromab des Kondensator (8) und stromauf der Fördereinrichtung (5) im Abwärmenutzungskreis (3) angeordnet oder daran angeschlossen ist.

7. Verfahren nach Anspruch 6,
**dadurch gekennzeichnet,**
- **dass** der Druckspeicher (16) als Federspeicher ausgestaltet ist, bei dem ein Speichervolumen (24) mittels einer einstellbaren Federkraft (25) auf den Mindestdruck vorgespannt ist, oder
- **dass** der Druckspeicher (16) als aktiver Druckspeicher ausgestaltet ist und einen Aktuator (30) zum Verändern des Mindestdrucks aufweist, und
- **dass** eine Steuereinrichtung (20) zum Betätigen des Aktuators (30) zum Einstellen des Mindestdrucks abhängig vom aktuellen Betriebszustand der Abwärmenutzungsvorrichtung (1) oder der Brennkraftmaschine (2) vorgesehen ist.

8. Verfahren nach Anspruch 7,
**dadurch gekennzeichnet, dass**
während des Warmbetriebs der Abwärmenutzungsvorrichtung (1) für transiente Betriebszustände der Abwärmenutzungsvorrichtung (1) der Hochdruck mit Hilfe des aktiven Druckspeichers (16) geregelt oder gesteuert wird.

9. Verfahren nach einem der Ansprüche 6 bis 8,
**dadurch gekennzeichnet, dass**
der Druckspeicher (16) mittels einer Ventileinrichtung (19) fluidisch mit dem Abwärmenutzungskreis (3) koppelbar und fluidisch vom Abwärmenutzungskreis (3) entkoppelbar ist.

## Claims

1. Waste heat utilisation apparatus for an internal combustion engine (2) of a motor vehicle, comprising:
- a waste heat utilisation circuit (3), in which a working medium (4) circulates,
- a conveying device (5) located in the waste heat utilisation circuit (3) for conveying the working medium (4) against a high pressure,
- an evaporator (6) located in the waste heat utilisation circuit (3) downstream of the conveying device (5) for evaporating the working medium (4) while utilising waste heat of the internal combustion engine (2),
- an expansion machine (7) located in the waste heat utilisation circuit (3) downstream of the evaporator (6) for expanding the working medium (4) to a low pressure,
- a condenser (8) located in the waste heat utilisation circuit (3) downstream of the expansion machine (7) for condensing the working medium (4),
- wherein the waste heat utilisation circuit (3) is connected to an accumulator (16),
**characterised in that**
- the accumulator (16) is designed as an active accumulator for ensuring a predetermined minimum pressure in the working medium (4) and comprises an actuator (30) for changing the minimum pressure,
- a control unit (20) is provided for actuating the actuator (30) to set the minimum pressure as a function of the current operating state of the waste heat utilisation apparatus (1) or the internal combustion engine (2),
- wherein the minimum pressure is above a resting pressure, which would adapt itself to ambient temperature during the cooling of the active mass of the working medium (4) which circulates during a warm operation in the switched-on state of the waste heat utilisation apparatus (1).

2. Waste heat utilisation apparatus according to claim 1,
**characterised in that**
the accumulator (16) is located in the waste heat utilisation circuit (3) downstream of the condenser (8) and upstream of the conveying device (5) or is connected to the waste heat utilisation circuit (3).

3. Waste heat utilisation apparatus according to claim 1 or 2,
**characterised in that**
the accumulator (16) is designed as a spring accumulator in which a storage volume (24) is preloaded to minimum pressure by means of an adjustable spring force (25).

4. Method for operating a waste heat utilisation apparatus (1) for an internal combustion engine (2) of a motor vehicle,
- wherein the waste heat utilisation apparatus (1) comprises:
- a waste heat utilisation circuit (3), in which a working medium (4) circulates,
- a conveying device (5) located in the waste heat utilisation circuit (3) for conveying the working medium (4) against a high pressure,
- an evaporator (6) located in the waste heat utilisation circuit (3) downstream of the conveying device (5) for evaporating the working medium (4) while utilising waste heat of the internal combustion engine (2),
- an expansion machine (7) located in the waste heat utilisation circuit (3) downstream of the evaporator (6) for expanding the working medium (4) to a low pressure,
- a condenser (8) located in the waste heat utilisation circuit (3) downstream of the expansion machine (7) for condensing the working medium (4),
- wherein the waste heat utilisation circuit (3) is connected to an accumulator (16),
**characterised in that**
if the waste heat utilisation apparatus (1) is switched off, a minimum pressure above a resting pressure, which would adapt itself to ambient temperature during the cooling of the active mass of the working medium (4) which circulates during a warm operation in the switched-on state of the waste heat utilisation apparatus (1) is ensured in the working medium (4).

5. Method according to claim 4,
**characterised in that**
a minimum pressure of at least 500 mbar is ensured in the working medium (4) in a cold state of the waste heat utilisation apparatus (1) cooled down to ambient temperature.

6. Method according to claim 4 or 5,
**characterised in that**
the minimum pressure is ensured by means of the accumulator (16) located downstream of the condenser (8) and upstream of the conveying device (5) in the waste heat utilisation circuit (3) or connected thereto.

7. Method according to claim 6,
**characterised in that**
- the accumulator (16) is designed as a spring accumulator in which a storage volume (24) is preloaded to minimum pressure by means of an adjustable spring force (25), or
- the accumulator (16) is designed as an active accumulator and comprises an actuator (30) for changing the minimum pressure, and
- a control unit (20) is provided for actuating the actuator (30) to set the minimum pressure as a function of the current operating state of the waste heat utilisation apparatus (1) or the internal combustion engine (2).

8. Method according to claim 7,
**characterised in that**
during the warm operation of the waste heat utilisation apparatus (1) the high pressure is controlled in a closed or open loop by means of the active accumulator (16) for transient operating states of the waste heat utilisation apparatus (1).

9. Method according to any of claims 6 to 8,
**characterised in that**
the accumulator (16) can be fluidically coupled to the waste heat utilisation circuit (3) and fluidically uncoupled from the waste heat utilisation circuit (3) by means of a valve device (19).

## Revendications

1. Dispositif d'utilisation de chaleur perdue pour un moteur à combustion interne (2) d'un véhicule automobile,
- comprenant un circuit d'utilisation de chaleur perdue (3), dans lequel circule un fluide de travail (4)
- comprenant un dispositif de transport (5) disposé dans le circuit d'utilisation de chaleur perdue (3) destiné à transporter le fluide de travail (4) à l'encontre d'une haute pression,
- comprenant un évaporateur (6) disposé dans le circuit d'utilisation de chaleur perdue (3) en aval du dispositif de transport (5) destiné à faire évaporer le fluide de travail (4) à l'aide de la chaleur perdue provenant du moteur à combustion interne (2),
- comprenant une machine d'expansion (7) disposée dans le circuit d'utilisation de chaleur perdue (3) en aval du compresseur (6) destiné à expanser le fluide de travail (4) à une basse pression,
- comprenant un condensateur (8) disposé dans le circuit d'utilisation de chaleur perdue (3) en aval de la machine d'expansion (7) destiné à condenser le fluide de travail (4),
- le circuit d'utilisation de chaleur perdue (3) étant raccordé à un accumulateur de pression (16),
**caractérisé**
- **en ce que** l'accumulateur de pression (16) est conçu sous la forme d'un accumulateur de pression actif destiné à assurer une pression minimale prédéfinie dans le fluide de travail (4) et comprend un actionneur (30) destiné à modifier la pression minimale,
- **en ce qu'**on prévoit un dispositif de commande (20) destiné à actionner l'actionneur (30) pour régler la pression minimale en fonction de l'état de fonctionnement réel du dispositif d'utilisation de chaleur perdue (1) ou du moteur à combustion interne (2),
- la pression minimale se situant en dessous d'une pression statique qui aurait été réglée à une température ambiante au moment du refroidissement de la masse active du fluide de travail (4) qui circule pendant un fonctionnement à chaud lorsque le dispositif d'utilisation de chaleur perdue (1) est mis en marche.

2. Dispositif d'utilisation de chaleur perdue selon la revendication 1,
**caractérisé en ce que**
l'accumulateur de pression (16) est disposé en aval du condensateur (8) et en amont du dispositif de transport (5) dans le circuit d'utilisation de chaleur perdue (3) ou est raccordé au circuit d'utilisation de chaleur perdue (3).

3. Dispositif d'utilisation de chaleur perdue selon la revendication 1 ou la revendication 2,
**caractérisé en ce que**
l'accumulateur de pression (16) est conçu sous la forme d'un ressort accumulateur dans lequel un volume d"accumulateur (24) est précontraint à la pression minimale au moyen d'une force du ressort (25) réglable.

4. Procédé de fonctionnement d'un dispositif d'utilisation de chaleur perdue (1) pour un moteur à combustion interne (2) d'un véhicule automobile,
- le dispositif d'utilisation de chaleur perdue (1) comprenant :
- un circuit d'utilisation de chaleur perdue (3) dans lequel circule un fluide de travail (4),
- un dispositif de transport (5) disposé dans le circuit d'utilisation de chaleur perdue (3) destiné à transporter le fluide de travail (4) à l'encontre d'une haute pression,
- un amortisseur (8) disposé dans le circuit d'utilisation de chaleur perdue (3) en aval du dispositif de transport (5), destiné à amortir le fluide de travail (4) à l'aide de la chaleur perdue provenant du moteur à combustion interne (2),
- une machine d'expansion (7) disposée dans le circuit d'utilisation de chaleur perdue (3) en aval de l'évaporateur (6), destiné à expanser le fluide de travail (4) à une basse pression,
- un condensateur (8) disposé dans le circuit d'utilisation de chaleur perdue (3) en aval de la machine d'expansion (4), destiné à condenser le fluide de travail (4),
- le circuit d'utilisation de chaleur perdue (3) étant relié à un accumulateur de pression (16),
**caractérisé en ce que**
lorsque le dispositif d'utilisation de chaleur perdue (3) est éteint, une pression minimale est assurée dans le fluide de travail (4), qui se situe au-dessus d'une pression statique, qui, lorsque la masse active du fluide de travail (4) se refroidit, circule pendant un fonctionnement à chaud, lorsque le dispositif d'utilisation de chaleur perdue (1) est en marche, aurait été réglée sur la température ambiante.

5. Procédé selon la revendication 4,
**caractérisé en ce que**
dans un état à froid du dispositif d'utilisation de chaleur perdue (1) refroidi à la température ambiante dans le fluide de travail (4), une pression minimale d'au moins 500 mbar est assurée.

6. Procédé selon la revendication 4 ou 5,
**caractérisé en ce que**
la pression minimale est assurée au moyen d'un l'accumulateur de pression (16) qui est disposé en aval du condensateur (8) et en amont du dispositif de transport (5) dans le circuit d'utilisation de chaleur perdue (3) et y étant raccordé.

7. Procédé selon la revendication 6, **caractérisé en ce que**
- l'accumulateur de pression (16) est conçu sous la forme d'un accumulateur à ressort, pour lequel un volume d'accumulation (24) est précontraint au moyen d'une force de ressort réglable (25) à la pression minimale ou
- **en ce que** l'accumulateur de pression (16) est conçu sous la forme d'un accumulateur de pression actif et comprend un actionneur (30) destiné à modifier la pression minimale, et
- **en ce qu'**un dispositif de commande (20) sert à actionner l'actionneur (30) pour régler la pression minimale en fonction de l'état de fonctionnement réel du dispositif d'utilisation de chaleur perdue (1) ou du moteur à combustion interne (2).

8. Procédé selon la revendication 7, **caractérisé en ce que** pendant le fonctionnement à chaud du dispositif d'utilisation de chaleur perdue (1) pour des états de fonctionnement transitoires du dispositif d'utilisation de chaleur perdue (1), la haute pression est réglée ou commandée à l'aide de l'accumulateur de pression actif (16)

9. Procédé selon l'une quelconque des revendications 6 à 8, **caractérisé en ce que** l'accumulateur de pression (16) peut être en communication fluidique avec le circuit d'utilisateur de chaleur perdue (3) à l'aide d'un système de soupape (19) et peut être désolidarisé fluidiquement du circuit d'utilisation de chaleur perdue (3).
